# EUROPÄISCHE PATENTSCHRIFT

(11) **EP 3 078 778 B1**
(45) Veröffentlichungstag und Bekanntmachung des Hinweises auf die Patenterteilung: **25.10.2017**
(21) Anmeldenummer: 16163775.6
(22) Anmeldetag: 05.04.2016
(51) Int. Cl.: E02D 27/42

(54) **GRÜNDUNG EINER WINDENERGIEANLAGE**
FOUNDATION OF A WIND ENERGY SYSTEM
FONDATION POUR EOLIENNE

(30) Priorität: 09.04.2015 DE 202015002656 U
(43) Veröffentlichungstag der Anmeldung: 12.10.2016
(73) Patentinhaber: Senvion GmbH, 22297 Hamburg (DE)
(72) Erfinder: SEIDEL, Marc, 49082 Osnabrück (DE); MIEBACH, Henrik, 51465 Bergisch Gladbach (DE)
(74) Vertreter: Seemann & Partner Patentanwälte mbB

(56) Entgegenhaltungen:
- WO-A1-2011/010937

## Beschreibung

Die Erfindung betrifft ein Gründungssystem zur Gründung einer Windenergieanlage im oder am Untergrund. Die Erfindung betrifft ferner eine Windenergieanlage, eine Gründung für eine Windenergieanlage, eine Tragstruktur für eine Windenergieanlage sowie ein Verfahren zur Errichtung einer Windenergieanlage.

Die Errichtung einer Windenergieanlage erfolgt in der Praxis in mehreren Stufen. Zunächst wird eine Gründungsstruktur, also eine Art Fundament, am oder im Untergrund befestigt. Beispielsweise werden Gründungspfähle mit Hilfe einer Schablone in den Meeresboden gerammt.

Anschließend werden Tragstrukturen in, an oder auf der Gründungsstruktur angeordnet und befestigt. Bekannt sind als Tragstruktur für Offshore-Windenergieanlagen beispielsweise sogenannte Jacket-Strukturen, die aus einem Gitterturm mit mehreren Füßen bestehen.

Auf diese Tragstruktur wird dann der Turm oder ein unterstes Turmsegment einer Windenergieanlage aufgesetzt, oder auch ein Übergangsstück, ein so genanntes "Transition Piece". Dieses kann zylindrisch oder konisch ausgebildet sein, wobei es im letzteren Fall einen Übergang zwischen dem größeren Durchmesser der Gründungsstruktur und dem kleineren Durchmesser des untersten Teils des Turms herstellt.

Eine entsprechende Gründung ist aus WO 2011/010937 A1 bekannt. Dieses Gründungssystem weist ein oder mehrere Hohlprofile auf, die in den Untergrund eingeführt sind, beispielsweise eingerammt, und die in einem unteren Teil mit Sand gefüllt sind. In jedes dieser Hohlprofile wird eine Tragstruktur eingeführt, die ein Oberflächenprofil aufweist, das eine schlüssige Verbindung mit einer Vergussmasse erlaubt, die nach dem Positionieren der Tragstruktur in das Hohlprofil eingefüllt wird und anschließend aushärtet.

Bei der Errichtung von Windenergieanlagen ist eine exakte Nivellierung des Anschlusses für den Turm sehr wichtig. Dies ist besonders bei Offshore-Windenergieanlagen eine Herausforderung, da die Positionierung und Ausrichtung der Gründungsstruktur in den meisten Fällen unter Wasser erfolgen muss und dabei dem Einfluss von Wind und Wellen ausgesetzt ist. Bei Jacket-Strukturen betrifft dies die Ausrichtung und Befestigung der Füße.

Das Einführen der Tragstruktur in das Hohlprofil wird in WO 2011/010937 A1 durch einen an die Tragstruktur angeschweißten Kragen begrenzt, dessen Unterseite eine elastische Schicht zum Ausgleich von wechselnden Kräften beim Aushärten der Vergussmasse aufweist. Unterschiede in der Höhe der Hohlprofile werden durch geeignete Unterlegscheiben ausgeglichen. Um die Längen individuell anpassen zu können, wird eine Vielzahl von Unterlegscheiben verschiedener Dicke vorgehalten.

Es ist eine Aufgabe der Erfindung, eine Gründung für eine Windenergieanlage zur Verfügung zu stellen, mit der eine dauerhaft sichere und einfache Aufstellung und Ausrichtung von Windenergieanlagen möglich ist.

Gemäß einem Aspekt der Erfindung wird diese Aufgabe durch ein Gründungssystem zur Gründung einer Windenergieanlage im oder am Untergrund, umfassend eine Gründungsstruktur mit wenigstens einem Hohlprofil und eine Tragstruktur einer Windenergieanlage, die in das wenigstens eine Hohlprofil eingeführt oder einführbar ist, wobei eine Länge der in das wenigstens eine Hohlprofil eingeführten oder einführbaren Tragstruktur über ein oder mehrere Adapterelemente einstellbar ist gelöst, das dadurch weitergebildet ist, dass das oder die Adapterelemente eine lastabführende Verbindung zwischen Tragstruktur und Hohlprofil mittels einer Konsolenstruktur herstellen, die am oberen Ende der Gründungsstruktur angeordnet und über das oder die Adapterelemente mit der Tragstruktur verbunden oder verbindbar ist.

Im Unterschied zu der Tragstruktur aus WO 2011/010937 A1, bei der ein Kragen direkt an die Tragstruktur angeschweißt ist, ist erfindungsgemäß nunmehr eine Konsolenstruktur vorgesehen, die die Aufgabe des Kragens übernimmt und auf dem oberen Ende des jeweiligen Hohlprofils aufsitzt. Diese den angeschweißten Kragen ersetzende Konsolenstruktur ist über ein oder mehrere längenverstellbare Adapterelemente mit der Tragstruktur verbunden, so dass die Notwendigkeit entfällt, Unterlegscheiben verschiedener Dicke vorzuhalten. Alle Komponenten, die zur Gründungsstelle mitgenommen werden, werden auch verbaut. Die eintauchende Länge kann erfindungsgemäß feiner als bisher eingestellt werden, wodurch die Nivellierung verbessert wird.

Tragstruktur und/oder Gründungsstruktur weisen vorteilhafter Weise einen kreisrunden Querschnitt auf. Es können aber auch mehreckige oder ovale Querschnitte verwendet werden. Die beiden Strukturen können auch unterschiedliche Querschnittsgeometrien aufweisen.

Vorteilhaft kann mit Hilfe der erfindungsgemäßen Adapterelemente eine Längenanpassung vorgenommen werden, wenn die Gründungsstrukturen unterschiedlich tief oder schief in den Meeresboden eingerammt wurden. So ist sichergestellt, dass die Tragstruktur vor der Errichtung der Windenergieanlage auf ihr mit ihrem Längsquerschnitt vertikal ausgerichtet werden kann.

Weiterhin vorteilhaft ist, dass die Adapterelemente einerseits eine vertikale Pfahl-Setzungstoleranz durch die Längenanpassung der Adapterelemente bis auf die Messtoleranz ausgleichen können. So kann die Höhe, mit der die Gründungsstruktur nach dem Setzen im Anschluss an das Einrammen in den Meeresboden noch aus dem Meeresboden heraussteht, ermittelt werden und die Adapterelemente entsprechend justiert werden.

Andererseits ist vorteilhaft, dass auch eine Schiefstellung der Gründungsstruktur ausgeglichen werden kann, in dem die Adapterelemente, die an einem Fuß der Gründungsstruktur angreifen, unterschiedlich lang eingestellt werden. Somit steht einem eine auf viele mögliche Rammungenauigkeiten individuell einstellbare Tragstruktur zur Verfügung.

Vorzugsweise wird die Justierung der Adapterelemente bereits am Hafen vor der Verschiffung der Tragstruktur vorgenommen. Weiterhin kann dies auch während der Verschiffung geschehen. Vorteilhafterweise kann diese Längenanpassung auch noch während des Errichtungsprozesses vorgenommen werden, indem vorzugsweise mit Tauchrobotern, die Länge der Adapterelemente angepasst wird.

Vorzugsweise werden an den Adapterelementen zusätzliche Elemente eingesetzt, die eine Dehnlänge erhöhen, sodass Schiefstellungen der Gründungsstruktur sowie vertikale Messtoleranzen ausgeglichen werden können. Besonders gut, aber nicht ausschließlich, geeignet sind hierfür Tellerfedern, Elastomerfedern und Dehnstäbe. So können nicht nur Rammungenauigkeiten, sondern auch Setzungstoleranzen ausgeglichen werden.

Ein weiterer Vorteil ist, dass die Tragstruktur nicht zentral in der Gründungsstruktur angeordnet sein muss, sondern auch eine exzentrische Anordnung eine erfindungsgemäße Gründungsstruktur ermöglicht.

Erfindungsgemäß stellen die Adapterelemente eine lastabführende Verbindung zwischen Tragstruktur und Gründungsstruktur mittels einer Konsolenstruktur her, wobei die Konsolenstruktur am oberen Ende der Gründungsstruktur angeordnet und mit der Tragstruktur verbunden ist.

Vorteilhaft ist eine Ausführung, bei der die Konsolenstruktur nicht direkt mit der Tragstruktur verbunden, beispielsweise verschweißt, wird, sondern temporär für die Errichtung und den Transport mit der Tragstruktur verbunden wird. Dies kann vorzugsweise durch Klemmkräfte oder Verkeilungen mit einem Holzstück geschehen. Hierdurch kann ein Kerben der Tragstruktur vermieden werden, sodass die Tragstruktur auch günstiger in Bezug auf Ermüdung ausgelegt und entsprechend Material und Kosten eingespart werden können.

In einer Ausführungsform sind die Adapterelemente zwischen einer Konsolenstruktur im oberen Bereich und an einem unteren Abschnitt der Tragstruktur im unteren Bereich angeordnet. Somit sind die Adapterelemente zwischen der Konsolenstruktur und der Befestigungsstruktur in einem unteren Abschnitt der Tragstruktur angeordnet, wobei die Konsolenstruktur oberhalb der Befestigungsstruktur angeordnet ist. Weiter bevorzugt weist die Gründungsstruktur mindestens drei Adapterelemente auf.

In einer Ausführungsform weisen die Adapterelemente Gewindestangen auf. Vorzugsweise ist die Länge der Gewindestangen mittels Befestigungsmuttern an der Konsolenstruktur einstellbar. Dies ist besonders vorteilhaft, weil die Befestigungsmuttern an der Konsolenstruktur auch noch erreichbar sind, wenn die Tragstruktur bereits in die Gründungsstruktur eingeführt wurde. So können vorzugsweise mit Hilfe von Tauchrobotern noch Längenanpassungen vorgenommen werden. Weiterhin möglich ist eine Einstellung der Länge der Gewindestangen mittels Befestigungsmuttern am unteren Abschnitt der Tragstruktur.

In einer weiteren Ausführungsform weisen die Adapterelemente Seilstrukturen auf. Diese sind beispielsweise mittels Knoten oder Klemmen längeneinstellbar.

In einer besonders bevorzugten Ausführungsform ist ein durch das Hohlprofil gebildeter Zwischenraum zwischen Gründungsstruktur und Tragstruktur mit einer Vergussmasse verfüllt oder verfüllbar. Die Konsolenstruktur mit der Adapterstruktur soll vorzugsweise nur temporär während der Errichtung Lasten übertragen, da andernfalls bei der Lastübertragung im Endzustand bei einer an die Tragstruktur geschweißten Konsolenstruktur Probleme mit dem Ermüdungsverhalten auftreten können. Vorteilhafterweise werden mittels der Vergussmasse in einem größeren Bereich die Lasten, die auf die Windenergieanlage wirken, über die Tragstruktur in die Gründungsstruktur über die gesamte Lebensdauer abgetragen. Besonders vorteilhaft ist, dass die Adapterelemente eine höhere Elastizität als die Vergussmassen-Verbindung aufweist, sodass ein Lastabtrag im vergossenen Zustand über die Adapterelemente vermieden wird.

In einem weiteren Aspekt der Erfindung wird eine Windenergieanlage mit einer erfindungsgemäßen Gründungsstruktur bereitgestellt. Die Windenergieanlage umfasst vorzugsweise auch ein Übergangsstück.

In einem weiteren Aspekt der Erfindung wird eine Gründung für eine Windenergieanlage im oder am Untergrund mit einer erfindungsgemäßen Gründungsstruktur bereit gestellt.

In einem weiteren Aspekt der Erfindung wird eine Tragstruktur für eine Windenergieanlage bereit gestellt, die mittels einer erfindungsgemäßen Gründungsstruktur im oder am Untergrund gegründet ist.

In einer bevorzugten Ausführungsform weist die Tragstruktur für eine Windenergieanlage eine fachwerkartige Jacket-Struktur mit mindestens drei Füßen auf.

Vorliegend beschrieben ist auch ein Verfahren zur Errichtung einer Windenergieanlage mit den Schritten:
a) Gründen einer Gründungsstruktur, die wenigstens ein Hohlprofil aufweist, im oder am Untergrund,
b) Verbinden einer Tragstruktur, die in ein Hohlprofil der Gründungsstruktur einzuführen ist, mit einer Konsolenstruktur mittels einem oder mehreren längenverstellbaren Adapterelementen, wobei die Konsolenstruktur zur Auflage auf einer Oberseite eines Hohlprofils der Gründungsstruktur ausgebildet ist,
c) Einführen der Tragstruktur in das Hohlprofil der Gründungsstruktur, bis die Konsolenstruktur auf einer Oberseite des Hohlprofils aufsitzt wobei das Adapterelement oder die Adapterelemente eine lastabführende Verbindung zwischen Tragstruktur und Gründungsstruktur herstellen,
d) Verfüllen eines durch das Hohlprofil gebildeten Zwischenraums zwischen Gründungsstruktur und Tragstruktur mit einer Vergussmasse, und
e) Positionieren und Befestigen einer Windenergieanlage auf der Tragstruktur,
wobei vor oder nach dem Einführen der Tragstruktur in das Hohlprofil der Gründungsstruktur eine Länge der in die Gründungsstruktur eingeführten oder einzuführenden Tragstruktur über das eine Adapterelement oder die mehreren Adapterelemente eingestellt wird.

Vorzugsweise wird eine Schieflage zwischen dem Hohlprofil der Gründungsstruktur und der Tragstruktur durch Einstellen unterschiedlicher Längen mehrerer Adapterelemente ausgeglichen oder eingestellt.

Für einen Transport oder zum Errichten wird die Konsolenstruktur vorteilhafterweise temporär an der Tragstruktur fixiert, insbesondere verklemmt oder verkeilt, insbesondere mittels wenigstens eines Holz- oder Kunststoffstücks. Damit können Schäden an den Komponenten vermieden werden und bei ihrer Auslegung und Dimensionierung müssen Transport- oder Errichtungsschäden nicht berücksichtigt werden.

Vorstehend beschriebene Aspekte und Ausführungsformen können miteinander kombiniert werden, um erfindungsgemäße Vorteile zu erreichen.

Die Erfindung wird nachstehend ohne Beschränkung des allgemeinen Erfindungsgedankens anhand von Ausführungsbeispielen unter Bezugnahme auf die Zeichnungen beschrieben. Es zeigen:
- Fig. 1: eine schematische Darstellung einer erfindungsgemäßen Windenergieanlage und
- Fig. 2: eine schematische Darstellung einer erfindungsgemäß verwendbaren Gründungsstruktur für eine Windenergieanlage.

In den Zeichnungen sind jeweils gleiche oder gleichartige Elemente und/oder Teile mit denselben Bezugsziffern versehen, so dass jeweils auf die vorstehende Beschreibung des Elementes und/oder Teils verwiesen wird.

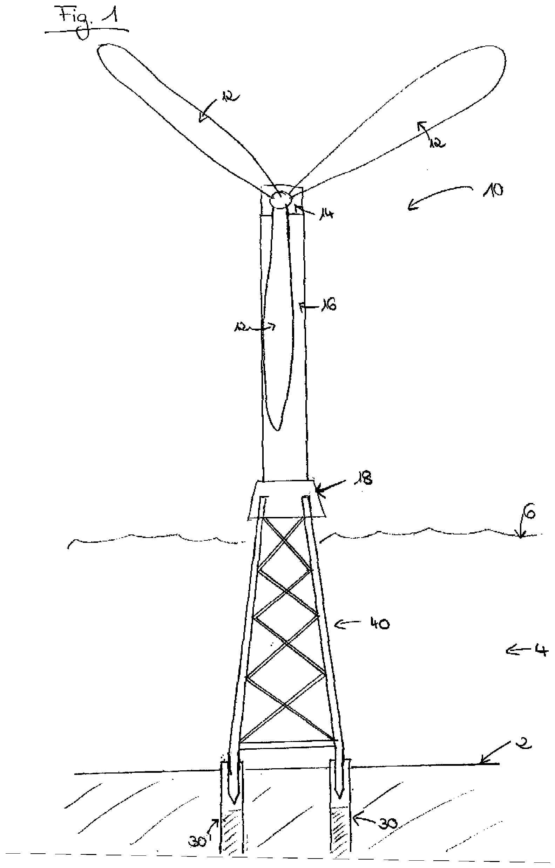

Fig. 1 zeigt schematisch eine Offshore-Windenergieanlage 10 mit einem an einem Maschinenhaus 14 angeordneten Rotor mit drei Rotorblättern 12. Das Maschinenhaus 14 ist auf einem Turm 16 drehbar angeordnet. Der Turm 16 ist über ein konisches Übergangsstück 18 mit einer als Jacket-Struktur ausgebildeten Tragstruktur 40 verbunden. Die Tragstruktur 40 ist wiederum mit einer Gründungsstruktur 30 verbunden, die aus mehreren Gründungspfählen gebildet ist, die wiederum in den Meeresboden-Untergrund 2 hineingerammt sind. Übergangsstück 18 und Turm 16 haben Durchmesser von jeweils mehreren Metern, beispielsweise zwischen 4 und 8 m. Das obere Ende der Tragstruktur 20 mit dem Übergangsstück 18 ist oberhalb der Wasseroberfläche 6 des Meeres 4 angeordnet.

Die Gründungspfähle der Gründungsstruktur 30 können durch das Einrammen in den Meeresboden 2 etwas unterschiedlich hoch aus dem Meeresboden 2 herausstehen. Es gilt also, die Jacket-Struktur 20 so passend auszurichten, dass die Windenergieanlage 10 mit ihrem Turm 16 anschließend vertikal auf ihr angeordnet ist.

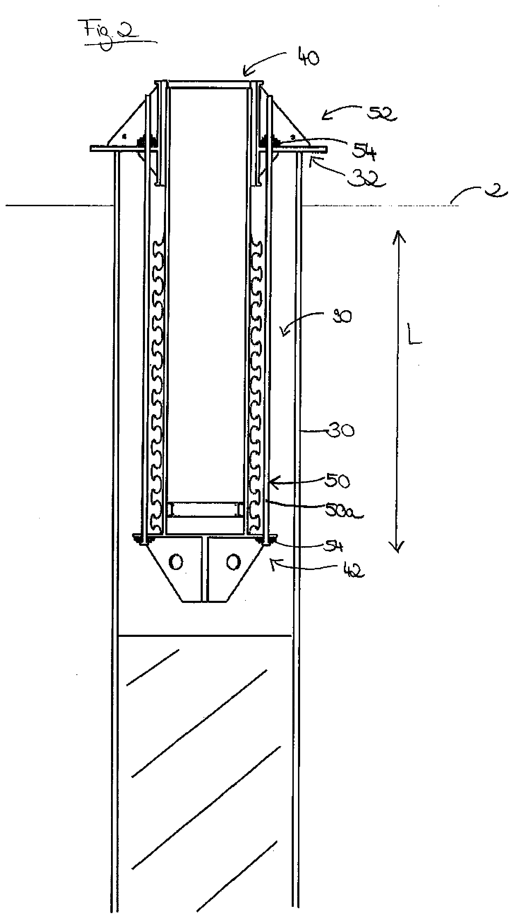

In Fig. 2 ist schematisch ein erstes Ausführungsbeispiel eines erfindungsgemäßen Gründungssystems dargestellt. Eine als Hohlprofil in Form eines Gründungspfahls ausgeführte Gründungsstruktur 30 ist in den Meeresboden 2 eingerammt. Da der Gründungspfahl am unteren Ende nicht verschlossen ist, verfüllt er sich bis zu einer bestimmten Höhe mit Sand des Meeresbodens. In das Hohlprofil der Gründungsstruktur 30 ist eine Tragstruktur 40 einer Windenergieanlage 10, vorzugsweise ein Fuß einer Jacket-Struktur, eingeführt. Mit der Tragstruktur 40 ist eine Konsolenstruktur 52 verbunden, die nach der Einführung der Tragstruktur 40 in die Gründungsstruktur 30 auf dem oberen Ende der Gründungsstruktur 30 aufliegt.

Zwischen der Konsolenstruktur 52 im oberen Bereich und einem unteren Abschnitt 42 der Tragstruktur 40, beispielsweise einem Fuß einer Jacket-Struktur, im unteren Bereich sind Adapterelemente 50 angeordnet, die eine Verbindung zwischen der Tragstruktur 40 und der Konsolenstruktur herstellen, die ansonsten nicht mit der Tragstruktur 40 verbunden ist, außer gegebenenfalls temporär zu Transport- und/oder Errichtungszwecken, um Schäden zu vermeiden. Mit Hilfe der Adapterelemente 50 ist die Länge L der eingeführten Tragstruktur 40 einstellbar, sodass die Füße einer Jacket-Struktur einzeln in der Länge L justiert werden können, um so mögliche Rammungenauigkeiten auszugleichen. Weiterhin stellen die Adapterelemente 50 eine lastabführende Verbindung zwischen Tragstruktur 40 und Gründungsstruktur 30 her.

Im gezeigten Ausführungsbeispiel sind als Adapterelemente 50 Gewindestangen 50a gewählt worden, deren Länge mittels Befestigungsmuttern 54 an der Konsolenstruktur 52 und/oder an einem unteren Abschnitt 42 der Tragstruktur 40, beispielsweise einem Fuß einer Jacket-Struktur, einstellbar ist. Hierzu weist der untere Abschnitt 42 der Tragstruktur 40, wie in Fig. 2 gezeigt, eine Befestigungsstruktur, beispielsweise in Form einer Platte mit Durchgangsöffnungen für die Gewindestangen 50a auf. In einer alternativen Ausführungsform können auch Seilstrukturen verwendet werden (nicht dargestellt).

Nachdem die Tragstruktur 40, vorzugsweise Jacket-Struktur, exakt positioniert ist, wird der durch das Hohlprofil gebildete Zwischenraum 90 zwischen Gründungsstruktur 30 und Tragstruktur 40 mit einer Vergussmasse verfüllt. In einer bevorzugten Ausführungsform weist die Tragstruktur 40 in dem zu verfüllenden Bereich oberflächenvergrößernde Strukturen auf, um eine bessere strukturelle Haftung und Haltbarkeit zu gewährleisten.

Die Gründungsstruktur 30 weist typischerweise einen Durchmesser von 1,5 - 3 m auf und die Tragstruktur 40 einen Durchmesser von 0,8 - 1,5 m. Vorzugsweise wird die Tragstruktur 40 über eine Länge L von 3 - 10 m in die Gründungsstruktur 30 abgesenkt. Der Zwischenraum 90 dieser Höhe wird anschließend mit einer Vergussmasse verfüllt. In einer alternativen Ausführungsform ist die Tragstruktur 40 nicht mittig in der Gründungsstruktur 30 angeordnet, sondern exzentrisch.

Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Untergrund
- 4: Meer
- 6: Wasseroberfläche
- 10: Windenergieanlage
- 12: Rotorblatt
- 14: Maschinenhaus
- 16: Turm
- 18: Übergangsstück
- 30: Gründungsstruktur
- 32: oberes Ende
- 40: Tragstruktur
- 42: unterer Abschnitt
- 50: Adapterelement
- 50a: Gewindestange
- 50b: Seilstruktur
- 52: Konsolenstruktur
- 54: Befestigungsmutter
- 90: Zwischenraum
- L: Länge

## Patentansprüche

1. Gründungssystem zur Gründung einer Windenergieanlage (10) im oder am Untergrund (2), umfassend eine Gründungsstruktur (30) mit wenigstens einem Hohlprofil und eine Tragstruktur (40) einer Windenergieanlage (10), die in das wenigstens eine Hohlprofil eingeführt oder einführbar ist, wobei eine Länge (L) der in das wenigstens eine Hohlprofil eingeführten oder einführbaren Tragstruktur über ein oder mehrere Adapterelemente (50) einstellbar ist, **dadurch gekennzeichnet, dass** die Adapterelemente (50) eine lastabführende Verbindung zwischen Tragstruktur (40) und Hohlprofil mittels einer Konsolenstruktur (52) herstellen, die am oberen Ende (32) der Gründungsstruktur (30) angeordnet und über die Adapterelemente (50) mit der Tragstruktur (40) verbunden oder verbindbar ist.

2. Gründungssystem nach Anspruch 1, **dadurch gekennzeichnet, dass** die Adapterelemente (50) zwischen einer Konsolenstruktur (52) und einer Befestigungsstruktur in einem unteren Abschnitt (42) der Tragstruktur (40) angeordnet sind, wobei die Konsolenstruktur (52) oberhalb der Befestigungsstruktur angeordnet ist.

3. Gründungssystem nach einem der vorstehenden Ansprüche, **dadurch gekennzeichnet, dass** die Gründungsstruktur (30) mindestens drei Adapterelemente (50) aufweist.

4. Gründungssystem nach einem der vorstehenden Ansprüche, **dadurch gekennzeichnet, dass** die Adapterelemente (50) Gewindestangen (50a) oder Seilstrukturen aufweisen.

5. Gründungssystem nach Anspruch 4, **dadurch gekennzeichnet, dass** die Länge (L) der Gewindestangen (50a) mittels Befestigungsmuttern (54) an der Konsolenstruktur (52) einstellbar ist.

6. Gründungssystem nach einem der Ansprüche 1 bis 5, **dadurch gekennzeichnet, dass** an den Adapterelementen (50) zusätzliche Elemente eingesetzt sind, die eine Dehnlänge erhöhen, insbesondere Tellerfedern, Elastomerfedern oder Dehnstäbe.

7. Gründungssystem nach einem der vorstehenden Ansprüche, **dadurch gekennzeichnet, dass** ein durch das Hohlprofil gebildeter Zwischenraum (90) zwischen Gründungsstruktur (30) und Tragstruktur (40) mit einer Vergussmasse verfüllt oder verfüllbar ist.

8. Windenergieanlage (10) mit einem Gründungssystem nach einem der vorstehenden Ansprüche.

9. Gründung für eine Windenergieanlage (10) im oder am Untergrund (2) mit einem Gründungssystem nach einem der Ansprüche 1 bis 7.

10. Tragstruktur (40) für eine Windenergieanlage (10), die mittels eines Gründungssystems nach mindestens einem der Ansprüche 1 bis 7 im oder am Untergrund (2) gegründet ist, wobei die Tragstruktur (40) eine fachwerkartige Jacket-Struktur (20) mit mindestens drei Füßen aufweist.

11. Tragstruktur (40) nach Anspruch 10, **dadurch gekennzeichnet, dass** die Tragstruktur (40) in einem unteren Abschnitt (42) wenigstens eine Aufnahme für wenigstens ein Adapterelement (50) aufweist.

12. Tragstruktur (40) nach Anspruch 11, **dadurch gekennzeichnet, dass** die Tragstruktur (40) über das wenigstens eine Adapterelement (50) längenverstellbar mit einer Konsolenstruktur (52) verbunden oder verbindbar ist, die eine untere Auflagefläche zur Auflage auf eine Oberseite einer Gründungsstruktur (30) aufweist.

13. Verfahren zur Errichtung einer Windenergieanlage (10) mit den Schritten:
a) Gründen einer Gründungsstruktur (30), die wenigstens ein Hohlprofil aufweist, im oder am Untergrund (2),
b) Verbinden einer Tragstruktur (40), die in ein Hohlprofil der Gründungsstruktur (30) einzuführen ist, mit einer Konsolenstruktur (52) mittels einem oder mehreren längenverstellbaren Adapterelementen (50), wobei die Konsolenstruktur (52) zur Auflage auf einer Oberseite eines Hohlprofils der Gründungsstruktur (30) ausgebildet ist.
c) Einführen der Tragstruktur (40) in das Hohlprofil der Gründungsstruktur (30), bis die Konsolenstruktur (52) auf einer Oberseite des Hohlprofils aufsitzt, wobei das Adapterelement (50) oder die Adapterelemente (50) eine lastabführende Verbindung zwischen Tragstruktur (40) und Gründungsstruktur (30) herstellen,
d) Verfüllen eines durch das Hohlprofil gebildeten Zwischenraums (90) zwischen Gründungsstruktur (30) und Tragstruktur (40) mit einer Vergussmasse, und
e) Positionieren und Befestigen einer Windenergieanlage (10) auf der Tragstruktur (40),
wobei vor oder nach dem Einführen der Tragstruktur (40) in das Hohlprofil der Gründungsstruktur (30) eine Länge (L) der in die Gründungsstruktur (30) eingeführten oder einzuführenden Tragstruktur (40) über das eine Adapterelement (50) oder die mehreren Adapterelemente (50) eingestellt wird.

14. Verfahren nach Anspruch 13, **dadurch gekennzeichnet, dass** eine Schieflage zwischen dem Hohlprofil der Gründungsstruktur (30) und der Tragstruktur (40) durch Einstellen unterschiedlicher Längen mehrerer Adapterelemente (50) ausgeglichen oder eingestellt wird.

15. Verfahren nach Anspruch 13 oder 14, **dadurch gekennzeichnet, dass** die Konsolenstruktur (52) für einen Transport oder zum Errichten temporär an der Tragstruktur (40) fixiert wird, insbesondere verklemmt oder verkeilt, insbesondere mittels wenigstens eines Holz- oder Kunststoffstücks.

## Claims

1. A foundation system for a foundation of a wind turbine (10) in or on the ground (2) comprising a foundation structure (30) with at least one hollow profile and a support structure (40) of a wind turbine (10) that is inserted or insertable into the at least one hollow profile, wherein a length (L) of the support structure that is inserted or insertable into the at least one hollow profile is adjustable by one or more adapter elements (50), **characterized in that** the adapter elements (50) establish a load-dissipating connection between the support structure (40) and hollow profile by means of a console structure (52) that is arranged on the top end (32) of the foundation structure (30) and is connected or connectable by the adapter elements (50) to the support structure (40).

2. The foundation system according to claim 1, **characterized in that** the adapter elements (50) are arranged between a console structure (52) and a fastening structure in a bottom section (42) of the support structure (40), wherein the console structure (52) is arranged above the fastening structure.

3. The foundation system according to one of the preceding claims, **characterized in that** the foundation structure (30) has a least three adapter elements (50).

4. The foundation system according to one of the preceding claims, **characterized in that** the adapter elements (50) have threaded rods (50a) or cable structures.

5. The foundation system according to claim 4, **characterized in that** the length (L) of the threaded rods (50a) is adjustable by means of fastening nuts (54) on the console structure (52).

6. The foundation system according to one of claims 1 to 5, **characterized in that** additional elements are inserted into the adapter elements (50) that increase an expansion length, in particular cup springs, elastomer springs or stretch bars.

7. The foundation system according to one of the preceding claims, **characterized in that** an intermediate space (90) formed by the hollow profile between the foundation structure (30) and support structure (40) is filled or fillable with a casting compound.

8. A wind turbine (10) with a foundation system according to one of the preceding claims.

9. A foundation for a wind turbine (10) in or on the ground (2) with a foundation system according to one of claims 1 to 7.

10. A support structure (40) for a wind turbine (10) that is founded by means of a foundation system according to at least one of claims 1 to 7 in or on the ground (2), wherein the support structure (40) has a lattice-like jacket structure (20) with at least 3 feet.

11. The support structure (40) according to claim 10, **characterized in that** the support structure (40) has at least one seat for at least one adapter element (50) in a bottom section (42).

12. The support structure (40) according to claim 11, **characterized in that** the support structure (40) is connected or connectable such that the length can be adjusted by the at least one adapter element (50) to a console structure (52) that has a contact surface to contact a top side of a foundation structure (30).

13. A method for erecting a wind turbine (10) with the steps:
a) founding a foundation structure (30) that has at least one hollow profile in or on the ground (2),
b) connecting a support structure (40) that is to be inserted into a hollow profile of the foundation structure (30) to a console structure (52) by means of one or more longitudinally adjustable adapter elements (50), wherein the console structure (52) is designed to contact a top side of a hollow profile of the foundation structure (30).
c) inserting the support structure (40) into the hollow profile of the foundation structure (30) until the console structure (52) sits on a top side of the hollow profile, wherein the adapter element (50) or the adapter elements (50) establish a load-dissipating connection between the support structure (40) and the foundation structure (30),
d) filling an intermediate space (90) that is formed by the hollow profile between the foundation structure (30) and the support structure (40) with a casting compound, and
e) positioning and fastening a wind turbine (10) on the support structure (40),
wherein before or after inserting the support structure (40) into the hollow profile of the foundation structure (30), a length (L) of the support structure (40) inserted or to be inserted in the foundation structure (30) is adjusted by means of the one adapter element (50) or the plurality of adapter elements (50).

14. The method according to claim 13, **characterized in that** a misalignment between the hollow profile of the foundation structure (30) and the support structure (40) is equalized or adjusted by adjusting various lengths of a plurality of adapter elements (50)

15. The method according to claim 13 or 14, **characterized in that** the console structure (52) is temporarily fixed to the support structure (40) for transportation or erection, in particular clamped or wedged, in particular by means of at least one wood or plastic piece.

## Revendications

1. Système de fondation pour ancrer une éolienne (10) dans ou sur le sol (2), comprenant une structure de fondation (30) ayant au moins un profil creux et une structure de support (40) d'une éolienne (10) qui est introduite ou est apte à être introduite dans ledit au moins un profil creux, dans lequel une longueur (L) de la structure de support introduite ou est apte à être introduite dans ledit au moins un profil creux est réglable par l'intermédiaire d'un ou plusieurs éléments d'adaptation (50), **caractérisé en ce que** les éléments d'adaptation (50) forment une liaison de dissipation de charge entre la structure de support (40) et le profil creux au moyen d'une structure formant console (52) qui est agencée à l'extrémité supérieure (32) de la structure de fondation (30) et qui est reliée ou apte à être reliée à la structure de support (40) par l'intermédiaire des éléments d'adaptation (50).

2. Système de fondation selon la revendication 1, **caractérisé en ce que** les éléments d'adaptation (50) sont agencés entre une structure formant console (52) et une structure de montage dans une portion inférieure (42) de la structure de support (40), la structure formant console (52) étant agencée au-dessus de la structure de fixation.

3. Système de fondation selon l'une des revendications précédentes, **caractérisé en ce que** la structure de fondation (30) comporte au moins trois éléments d'adaptation (50).

4. Système de fondation selon l'une des revendications précédentes, **caractérisé en ce que** les éléments d'adaptation (50) comportent des tiges filetées (50a) ou des structures à câbles.

5. Système de fondation selon la revendication 4, **caractérisé en ce que** la longueur (L) des tiges filetées (50a) sur la structure formant console (52) est apte à être réglée au moyen d'écrous de fixation (54).

6. Système de fondation selon l'une des revendications 1 à 5, **caractérisé en ce que** des éléments supplémentaires sont utilisés sur les éléments d'adaptation (50), qui augmentent une longueur de dilatation, étant en particulier des ressorts à lames, des ressorts en élastomères ou des tiges de dilatation.

7. Système de fondation selon l'une des revendications précédentes, **caractérisé en ce qu'**un espace intermédiaire (90) formé par le profil creux entre la structure de fondation (30) et la structure de support (40) est rempli ou est apte à être rempli par une produit de remplissage.

8. Éolienne (10) incluant un système de fondation selon l'une quelconque des revendications précédentes.

9. Éolienne (10) placée dans ou sur le sol (2), incluant un système de fondation selon l'une des revendications 1 à 7.

10. Structure de support (40) pour une éolienne (10), qui est située dans ou sur le sol (2) au moyen d'un système de fondation selon au moins l'une des revendications 1 à 7, la structure de support (40) comprenant une structure formant gaine (20) en treillis ayant au moins trois pieds.

11. Structure de support selon la revendication 10, **caractérisée en ce que** la structure de support comprend, dans une portion inférieure, au moins un réceptacle pour recevoir au moins un élément d'adaptation (50).

12. Structure de support selon la revendication 11, dans laquelle la structure de support est reliée ou apte à être reliée de manière réglable en longueur, par l'intermédiaire d'au moins un élément d'adaptation (50), à une structure formant console (52) qui présente une surface de support inférieure pour reposer sur un côté supérieur d'une structure de fondation (30).

13. Procédé de construction d'une éolienne (10) comprenant les étapes consistant à :
a) ancrer une structure de fondation (30) qui présente au moins un profil creux, dans ou sur le sol (2),
b) fixer une structure de support (40), qui est insérée dans un profil creux de la structure de fondation (30), à une structure formant console (52) au moyen d'un ou plusieurs éléments d'adaptation (50), la structure formant console (52) étant conçue pour reposer sur un côté supérieur d'un profil creux de la structure de fondation (30),
c) insérer la structure de support (40) dans le profil creux de la structure de fondation (30) jusqu'à ce que la structure formant console (52) repose sur un côté supérieur du profilé creux, l'élément d'adaptation ou les éléments d'adaptation (50) réalisant une liaison de dissipation de charge entre la structure de support (40) et la structure de fondation (30),
d) remplir un espace intermédiaire (90) formé entre la structure de fondation (30) et la structure de support (40) au travers du profil creux avec un composé de remplissage, et
e) positionner et fixer une éolienne (10) sur la structure de support (40),
une longueur (L) de la structure de support (40) étant, avant ou après l'introduction de la structure de support (40) dans le profil creux de la structure de fondation (30), introduite ou apte à être introduite dans la structure de fondation (30) par l'intermédiaire de l'élément d'adaptation (50) ou de la pluralité d'éléments d'adaptation (50).

14. Procédé selon la revendication 13, **caractérisé en ce qu'**une position oblique entre le profil creux de la structure de fondation (30) et la structure de support (40) est équilibrée ou ajustée en ajustant différentes longueurs d'une pluralité d'éléments d'adaptation (50).

15. Procédé selon la revendication 13 ou la revendication 14, **caractérisé en ce que** la structure formant console (52) est temporairement fixée à la structure de support (40) pour le transport ou la mise en place, en particulier bloquée ou coincée, notamment au moyen d'au moins une pièce en bois ou en matière plastique.
